(19) Europäisches Patentamt
European Patent Office
Office européen des brevets

(11) Veröffentlichungsnummer: **0 217 080 B1**

(12) # EUROPÄISCHE PATENTSCHRIFT

(45) Veröffentlichungstag der Patentschrift: **25.01.89**

(51) Int. Cl.⁴: **C 09 K 21/12**, C 08 G 18/38, C 08 G 18/50

(21) Anmeldenummer: **86111045.0**

(22) Anmeldetag: **09.08.86**

(54) **Füllstoffhaltige Intumeszenzmassen und Konstruktionselemente.**

(30) Priorität: **24.08.85 DE 3530358**

(43) Veröffentlichungstag der Anmeldung: **08.04.87 Patentblatt 87/15**

(45) Bekanntmachung des Hinweises auf die Patenterteilung: **25.01.89 Patentblatt 89/4**

(84) Benannte Vertragsstaaten: **AT BE CH DE FR GB LI NL SE**

(56) Entgegenhaltungen:
**DE-A-3 302 416**
**DE-A-3 302 417**

(73) Patentinhaber: **BAYER AG, Konzernverwaltung RP Patentabteilung, D-5090 Leverkusen 1 Bayerwerk (DE)**

(72) Erfinder: **von Bonin, Wulf, Dr., Mendelsohnstrasse 30, D-5090 Leverkusen 1 (DE)**

EP 0 217 080 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

**Beschreibung**

Es ist bekannt, z. B. aus der DE-OS-3 302 416, Intumeszenzwerkstoffe für den vorbeugenden Brandschutz zu erhalten, indem man Isocyanate mit phosphorhaltigen, Hydroxylgruppen tragenden Kondensationsprodukten gegebenenfalls in Gegenwart von Cyanursäureabkömmlingen und nach Bedarf mit Füllstoffen umsetzt.

Ein für Brandschutzzwecke wegen der zwischen 150 und 400°C erfolgenden Wasserabspaltung besonders geeigneter Füllstoff ist das Aluminiumoxid-Hydrat bzw. Aluminiumhydroxid, das auch in Formulierungen anders aufgebauter Polymermaterialien Verwendung findet.

Aluminiumhydroxide werden auch in Kautschukmischungen als flammhemmende Füllstoffe eingesetzt.

Überraschenderweise wurde jetzt gefunden, daß Intumeszenzwerkstoffe, erhältlich durch Umsetzung von Polyisocyanaten mit

phosphorhaltigen Hydroxylverbindungen, insbesondere mindestens zwei Hydroxylgruppen aufweisenden phosphorhaltigen Kondensationsprodukten, erhältlich durch Kondensation von gegebenenfalls OH-Gruppen enthalten den primären oder sekundären aliphatischen, cyccloaliphatischen, aromatischen, araliphatischen oder heterocyclischen Mono und/oder Polyaminen, Carbonylverbindungen und Dialkylphosphiten, gegebenenfalls anschließendem oxalkylieren, und gegebenenfalls Cyanursäure und/oder Cuanuersäurederivaten, gegebenenfalls

in Gegenwart von Hilfs- und Zusatzstoffen

bei Verwendung von z. B. Aluminiumhydroxid-Füllstoffen als Zusatzstoff nur dann ihre Intumeszenzeigenschaften beibehalten, wenn der Füllstoff über 5 µm (D50) liegende mittlere Korngrößen und eine BET-Oberfläche von weniger als ca. 5 $m^2/g$ aufweist. Die BET-Methode zur Messung innerer Oberflächen (z. B. nach Brunauer, Emmet oder Teller) ist bekannt und beruht auf der Adsorption von Inertgasen auf diesen Oberflächen.

Diese Beobachtung bezieht sich auch auf sämtliche anderen Füllstoffe, insbesondere aber auf die Al-Hydroxide.

Das bedeutet, daß nur dann nach dem vorgenannten Verfahren brauchbar intumeszierende massive oder poröse Al-Hydroxid gefüllte Materialien für den vorbeugenden Brandschutz erhalten werden, wenn der an und für sich im Bereich des Brandschutzes bekannte Füllstoff Aluminiumhydroxid im oben genannten Korngrößenbereich verwendet wird.

Die Verwendung von Füllstoffen in solchen Intumeszenzmaterialien ist immer dann erwünscht, wenn die bei Beflammung gebildeten Intumeszenzschäume gute Stabilität gegen Flammenerosion besitzen und keramisierbar sein sollen. Eine besonders gute Keramisierungsneigung wird immer dann beobachtet, wenn neben Al-Hydroxiden als Füllstoff Glas, Alkali- und Erdalkalisilikate, z. B. von Na, K, Ca, Zn oder Borsate und Phosphate bzw. Polyphosphate wie z. B. Ammoniumpolyphosphat, Melaminphosphat oder -pyrophosphat, Borax oder Zinkborat, bzw. Oxide wie MgO, $Al_2O_3$; $Fe_2O_3$, insbesondere $CaCO_3$, Dolomit, in Mengen von 1 - 100 Gew.-%, vorzugsweise 5 - 50 % bezogen auf Al-Hydroxid mitverwendet werden. Natürlich sind statt des Al-Hydroxids auch andere, insbesondere bei Beflammung Wasser abgebende Füllstoffe, wie sie in der folgenden Aufzählung beispielhaft genannt sind, in Betracht zu ziehen:

$B(OH)_3$
$CaO.Al_2O_3.10\ H_2O$
Nesquehonit
$MgCO_3.3\ H_2O$ Wermlandit
$Ca_2Mg_14(Al, Fe)_4CO_3(CO_3(OH)_42.29\ H_2O$
Thaumasit
$Ca_3Si(OH)_6(SO_4)\ (CO_3)12.\ H_2O$
Artinit
$Mg_2(OH)_2CO_3.3\ H_0$*Ettringit
$3\ CaO.Al_2O_3.3\ CaSO_4.32\ H_2O$
Hydromagnesit
$Mg_5(OH)_2(CO_3)_4.4\ H_2O$
Hydrocalumit
$Ca_4Al_2(OH)_14.6\ H_2O$
Hydrotalkit
$Mg_6Al_2(OH)_16CO_3.4\ H_2O$
Alumohydrocalcit
$CaAl_2(OH)_4\ 8CO_3)_2.3\ H_2O$
Scarbroit
$Al_14(CO_3)(OH)_{36}$
Hydrogranat
$3\ CaO.Al_2O_3.6\ H_2O$
Dawsonit
$NaAl(OH)CO_3$

Wasserhaltige Zeolithe, Vermikulite, Perlite, Glimmer, Alkalisilikate, Borsäure, Borax, modifizierte Graphite, Kieselsäuren.

Aufgrund der guten Zugänglichkeit und der guten Beständigkeit wird dem Aluminiumhydroxid jedoch der

Vorzug gegeben.

Für alle diese Füllstoffe gilt der obige Befund der Abhängigkeit der Intumeszenzfähigkeit von deren Korngröße.

Das bedeutet, daß die Intumeszenzfähigkeit der Intumeszenzwerkstoffe durch die Korngröße der in ihnen enthaltenen Füllstoffe bzw. Füllstoffgemische überraschenderweise steuernd beeinflußt werden kann.

Gegenstand der Erfindung sind somit bei Temperaturen über 100-C Wasser abspaltende Füllstoffe enthaltende, massive oder poröse Intumeszenzmassen und Konstruktionselemente, erhältlich durch Umsetzung von Polyisocyanaten mit phosphorhaltigen Hydroxylverbindungen, insbesondere mindestens zwei Hydroxylgruppen aufweisenden phosphorhaltigen Kondensationsprodukten, erhältlich durch Kondensation von gegebenenfalls OH-Gruppen enthaltenden primären oder sekundären aliphatischen, araliphatischen oder heterocyclischen Mono- und/oder Polyaminen, Carbonylverbindungen und Dialkylphosphiten, gegebenenfalls unter anschließendem Oxalkylieren, und gegebenenfalls Cyanursäure und/oder Cyanursäurederivaten, in Gegenwart von oberhalb 100°C wasserabspaltenden Füllstoffen und gegebenenfalls weiteren Hilfsund Zusatzstoffen,

- dadurch gekennzeichnet, daß als Wasser abspaltende Füllstoffe solche verwendet werden, die mittlere Korngrößen über 5 µm besitzen, vorzugsweise 8 - 50 µm, und/oder BET-Oberflächen von weniger als 5 $m^2/g$, vorzugsweise 2 - 0,1 $m^2/g$ aufweisen.

Die erfindungsgemäßen Intumeszenzwerkstoffe enthalten in der Regel zwischen 0,3 und 85 Gew.-%, vorzugsweise 30 bis 60 Gew.-% der Füllstoffe, vorzugsweise Al-Hydroxid der genannten Korngrößen in Mengen von 0,3 bis 85 Gew.-%.

Erfindungsgemäß ist ferner bevorzugt, daß die Intumeszenzmassen neben Al-Hydroxid der genannten Korngrößen weiter Füllstoffe auf Carbonatbasis bei einer Füllstoffgesamtmenge von 0,3 - 85 Gew.-% enthalten.

Die Erfindung betrifft speziell Konstruktionselemente für den vorbeugenden Brandschutz, hergestellt unter Mitverwendung der Intumeszenzmassen gemäß Anspruch 1 - 3.

Intumeszenzmassen sind bekanntlich Materialien, die bei Einwirkung von Feuer und Hitze aufschäumen und dabei einen isolierenden und feuerabweisenden Schaum ausbilden, der die rückwärtigen Bezirke vor der Feuereinwirkung schützt. Solche Intumeszenzmassen sind bekannt (DE-OS-3 041 731, DE-OS-3 109 352).

Als Konstruktionselemente mit Intumeszenzwirkung für den vorbeugenden Brandschutz werden solche Konstruktionselemente verstanden, deren Brandschutzwirkung darin besteht, daß sie im Brandfalle durch die Erhitzung unter Ausbildung eines feuerabweisenden und isolierenden Schaumes expandieren, dadurch im Brandfalle oftmals auftretende Verwerfungen, Ritzen und Fugen, Spalte usw. gegen den Durchtritt von Rauch und Flammen, bzw. Flammengasen verschließen und die rückwärtigen, dem Feuer abgewandten Teile gegen den Zugriff des Feuers abschirmen.

Als solche Konstruktionselemente werden hier beispielsweise bezeichnet: Wandverkleidungen, Behälterabdeckungen, Platten, Wandelelemente, Sicherheitsgehäuse, in Fugen eingebaute oder in sie eingelegte oder eingedrückte Profile, Dichtungselemente, Halbzeuge und Formteile für spezielle geometrisch fallweise verschiedenartige Ausformungen von Sicherungsvorrichtungen, Sandwiches, bzw. einzelne Bestandteile von Verbundwerkstoffen in Plattenform, Pfropfen, Verschlußelemente, Kabeltrassen.

Vorzugsweise handelt es sich um Konstruktionselemente aus mehr oder weniger harten, selbstragenden oder verstärkten Intumeszenzwerkstoffen, die massiven, porösen oder schaumstoffartigen Charakter haben können.

Die bisher zur Herstellung solcher Konstruktionselemente evtl. geeigneten harten Intumeszenzmaterialien haben den Nachteil der mangelnden Beständigkeit gegen Flammenerosion.

Bei den konventionellen intumeszierenden Werkstoffen handelte es sich um Mischungen von mehreren Komponenten, z. B. um einen zumeist phosphorhaltigen Säurespender, um ein die Ausbildung des Schaumes bewirkendes, bzw. verbesserendes Carbonific, zumeist einen Polyalkohol und um ein Treibmittel, zumeist ein Ammoniumsalz oder auch sonstige Stickstoff enthaltende Verbindungen.

Gemische dieser Komponenten, gegenenfalls mit weiteren Hilfsmitteln, wurden als Pulvermischungen granuliert oder mit Bindemitteln versehen, bisher als Intumeszenzmassen eingesetzt. Auch Alkalisilikate mit bei Beflammung verdampfenden Wasseranteilen wurden für diesen Zweck benutzt, d.h. als Intumeszenzmassen für den vorbeugenden Brandschutz eingesetzt.

Abgesehen von gewissen nur unter erheblichen unerwünscht aufwendigen Vorsichtsmaßnahmen herzustellenden, auch als Intumeszenzmittel wirkenden Nitroaromaten sind die bekannten Intumeszenzmassen der Praxis bei zufriedenstellender Wirksamkeit teilweise hygroskopisch, teilweise luftempfindlich und wasserempfindlich. Daher sind sie selbst dann, wenn sie mit relativ wasserbeständigen Bindemitteln zusammen verarbeitet werden, nicht wasserbeständig und können nur da zum Einsatz gelangen, wo kein Regen oder fließendes Wasser auftreten kann, oftmals muß sogar ein Schutz gegen Luft- und Luftfeuchtigkeitszutritt vorgenommen werden.

Andererseits besteht im Schiffbau, Fahrzeugbau, Hochbau, Tiefbau und im bereich der Elektrotechnik ein erheblicher Bedarf an wasserbeständigen Intumeszenzmassen.

Diesem Bedürfnis entsprachen Konstruktionselemente, die gemäß DE-OS-3 302 416 aus wasserfestem Intumeszenzmaterial hergestellt werden konnten.

Da diese Intumeszenzmaterialien jedoch noch Wünsche im Hinblick auf die Beständigkeit gegen die bei

starken Bränden auftretende erhebliche Flammerosion des Intumeszenzschaumes offen ließen, war es erforderlich, hier nach verbesserten Lösungen zu suchen, wie sie durch die vorliegende Erfindung ermöglicht werden.

Die erfindungsgemäßen füllstoffhaltigen Intumeszenzmassen können so hergestellt werden, daß im Brandfalle ein durch die keramisierbaren Füllstoffe, bzw. Füllstoffgemische gegen das mechanische und oxidative Abtragen des Intumeszenzschaumes durch die Flamme (Flammenerosion) stabilisierter isolierender und flammenabweisender Intumeszenzschaum gebildet wird. Hierzu ist es jedoch erfindungsgemäß erforderlich, die vorzugsweise über 100°C Wasser abgebenden Füllstoffe im geeigneten Korngrößenbereich einzusetzen, da überraschenderweise ein Unterschreiten der vorgenannten Korngrößenbereiche die Ausbildung des Intumeszenzschaumes unterbindet.

Erfindungsgemäß kommen zur Herstellung der Intumeszenzmassen als Polyisocyanate solche in Frage, wie sie z. B. in der DE-OS-3 302 416 auf den Seiten 12 - 15 beschrieben werden.

Erfindungsgemäß bevorzugt sind Intumeszenzmassen und Konstruktionselemente aus solchen Polyisocyanaten, wie sie durch Anilin-Formaldehyd-kondensation und anschließende Phosgenierung erhalten werden, sowie solche Intumeszenzmassen und Konstruktionselemente, bei denen als phosphorhaltige Hydroxylverbindungen mindestens zwei Hydroxylgruppen aurweisende Kondensationsprodukte der Formel

$$(RO)_2PO\text{-}CH_2\text{-}N=(CHX\text{-}CHX\text{-}OH)_2$$

in der
R = $C_1$-$C_8$-Alkyl oder $C_1$-$C_8$-Hydroxylalkyl und
X = H oder Methyl bedeuten,

verwendet werden.

Es kommen erfindungsgemäß jedoch auch andere phosphorhaltige Hydroxylverbindungen in Betracht, wie etwa vorzugsweise mindestens zwei Hydroxylgruppen enthaltende

- Ester von phosphorhaltigen Säuren wie Phosphorsäuren der verschiedenen Kondensationsgrade bis zur Metaphosphorsäure, oder von Phosphonsäuren, Phosphinsäuren, z. B. deren Alkoxylierungsprodukte bzw. Umsetzungsprodukte,
- Salze aus Hydroxylgruppen enthaltenden Aminen und den verschiedenen Phosphorsäuren, bzw.
- Amide der verschiedenen Phosphorsäuren, die Hydroxylgruppen enthalten,

bzw. deren Mischformen.

Als Cyanursäurederivate werden gegebenenfalls bevorzugt Melamin und/oder wasserunlösliche Melamin- oder Harnstoff-Formaldehyd-Kondensate verwendet, prinzipiell sind eine Vielzahl von Cyanursäureabkömmlingen geeignet.

Die verwendeten Intumeszenzwerkstoffe weisen in der Regel Raumgewichte von 0,05 bis 1,6, vorzugsweise von 0,15 - 0,9 g/$cm^3$ auf.

Die erfindunsgemäßen füllstoffhaltigen Intumeszenzmassen, die neben unter 1%, vorzugsweise unter 0,5 % Wasser gegbenenfalls noch Cyanursäureabkömmlinge und weitere Zusatzstoffe, wie Weichmacher, etwa Phosphorsäureester oder Methylphosphonsäureester enthalten können, wobei der Zusatz von Melamin und/oder Methylphosphorsäuredialkylestern bevorzugt vorgenommen wird, während der Zusats der weiteren Zusatzstoffe, z. B. von Polyalkoholen, Farbstoffen, Porenstabilisatoren, Treibmitteln, Füllstoffen usw. in bezug auf den Erfindungsgegenstand lediglich ergänzdenden Charakter hat, stellen massive bis schaumstoffartige Produkte mit regulierbarem Intumeszenzverhalten und guter Wasserbeständigkeit und guter Beständigkeit gegen Flammenerosion dar, was als erheblicher technischer Vorteil zu sehen ist.

Im folgenden wird die Herstellung der erfindungsgemäß zu verwendenden wasserabspaltende Füllstoffe enthaltenden Intumeszenzwerkstoffe bzw. damit erhältlicher Konstruktionselemente beispielhaft erläutert:

Im einfachsten Falle werden sie durch Vermischen und Reaktion von Polyisocyanaten mit den vorgenannten füllstoffhaltigen Kondensationsprodukten gegebenenfalls unter Mitverwendung von Katalysatoren auf Basis z. B. von Aminen, Phosphorverbindungen oder metallorganischen Verbindungen, wie sie dem Fachmann geläufig sind, in offenen oder geschlossenen Formen hergestellt, die gegebenenfalls Verstärkungselemente eingelegt enthalten können, oder die Umsetzungsprodukte werden nach der Herstellung durch spanabhebende Bearbeitung in die gewünschte Form gebracht. Eine Herstellung z. B. als Beschichtungs- oder Verfüllungsmaterial vor Ort zur Erzielung der gewünschten Ausbringungsform in situ ist ebenfalls in Betracht zu ziehen, desgleichen das Aufsprühen des Reaktionsgemisches mit oder ohne Zufuhr von Hilfsgas oder Wärme auf verschiedenste Träger.

Es können die aus der Polyurethantechnik bekannten Maschinen Verwendung finden.

Das Mischungsverhältnis zwischen Polyisocyanaten (vorzugsweise Polyisocyanaten, die technisch auf Basis von Anilin-Formaldehydkondensaten und anschließende Phosgenierung hergestellt werden) und den Isocyanat-reaktiven Reaktionspartnern ist zweckmäßigerweise annähernd stöchiometrisch zu wählen; hierbei sollten gegebenenfalls im Reaktionsgemisch enthaltene Anteile an Wasser mit berücksichtigt werden. Falls eine weniger gute Wasserbeständigkeit das Intumeszenzwerkstoffes in Kauf genommen werden kann, ist es auch möglich, mit weniger als der stöchiometrischen Isocyanatmenge zu arbeiten, sie sollte aber

zweckmäßigerweise 50 Mo-% der stöchiometrisch nötigen Isocyanatmenge nicht unterschreiten. Zur Erzielung spezieller Effekte, z. B. zum Zwecke einer gewünschten weiteren Reaktionsfähigkeit des Intumeszenzmaterials, höherere Vernetzungsmöglichkeit oder verbesserter Kombinierbarkeit mit weiteren Bestandteilen der Konstruktionselemente oder auch um spätere Härtungsreaktionen der Intumeszenzwerkstoffe zu ermöglichen, kann auch die stöchiometrisch notwendige Isocyanatmenge überschritten werden, wobei im allgemeinen 50 Mol-% der stöchiometrisch notwendigen Isocyanatmenge nicht überschritten werden, obgleich auch höhere Isocyanatmengen in speziellen Fällen in Betracht zu ziehen sind.

Bei der Herstellung der Intumeszenzmassen wird analog der in der DE-OS-3 302 416 beschriebenen Weise verfahren.

Die erfindungsgemäßen Konstruktionselemente können ausschließlich aus den vorbeschriebenen Intumeszenzwerkstoffen bestehen, vorzugsweise können sie aber auch Werkstoffkombinationen darstellen und/oder sonstige Montage- oder Beschichtungshilfs- und Zusatzmittel zu Zwecken der speziellen Einsatzgebieten angepaßten Verarbeitbarkeit bzw. Anwendbarkeit, z. B. Verstärkungselemente oder/und Trägersubstrate enthalten.

Bei der Herstellung von solchen Konstruktionselementen kann kontinuierlich oder diskontinuierlich gearbeitet werden.

Die Herstellung kann durch Vermischen der Komponenten bzw. bereits vorgemischter Komponentengemische vor Ort geschehen, wobei die Reaktionsmischung machinell oder per Hand in z. B. zu verschließende Öffnungen bzw. beheizte oder unbeheizte Formen drucklos oder unter Druck eingegossen wird, wo sie dann aufschäumen bzw. aushärten kann. Die Mischung kann bei entsprechender technischer Ausrüstung auf die zu schützenden Substrate und Untergründe aufgesprüht, aufgestrichen oder aufgegossen werden. Es ist auch in Betracht zu ziehen, daß man zunächst Halbzeuge, z. B. Schaumstoffe, Profile oder Beschichtungen herstellt und diese dann in technisch erforderlicher Weise weiterverarbeitet, z. B. durch Schneiden, Verpressen, Stanzen durch Warmverformen bei ca. 110 - 250°C. Verschweißen, Beschichten und Verkleben.

Durch Kombination der erfindungsgemäß füllstoffhaltigen Intumeszenzwerkstoffe mit geschäumten oder massiven anorganischen oder organischen Zuschlagstoffen, wie z. B. Polystyrolschaum, Polyurethanschaum, Phenoplasten, Aminoplasten oder Kies oder Blähton, Harnstoff- oder Phenolharzschäumen, Schaumglas, Glasfasern, Holz, Mineralwolle, Bims usw., können als Konstruktionselemente auch Verbunde mit speziellen Intumeszenzeigenschaften erhalten werden. Die Herstellung von mit Fasern oder Drähten bzw. Geweben, Strängen oder Vliesen aus organischen oder anorganischen Materialien verstärkten Konstruktionselementen oder ihre Verwendung als Bestandteile in Mehrschicht- bzw. Sandwichaufbauten sind ebenfalls in Betracht zu ziehen; ebenso die Kombination mit anderen Intumeszenzmaterialien auf organischer oder anorganischer Basis.

Die erfindungsgemäßen Konstruktionselemente zeichnen sich dadurch aus, daß sie ihre Intumeszenzeigenschaften auch bei Einwirkung von fließenden Wasser nicht verlieren. Im allgemeinen beginnen sie bei Temperaturen oberhalb von 200°C, insbesondere oberhalb 300°C, aufzuschäumen. In der Flamme expandieren sie um ca. 50 bis über 300 Vol-%, je nach Zusammensetzung, Korngrößenauswahl der Füllstoffe, und Art der Erhitzung. Sie sind vorzugsweise halogenfrei formulierbar und können oftmals schwer entflammbar eingesteilt werden. Der bei Beflammung entstehende Intumeszenzschaum hat eine gute Beständigkeit gegen Flammenerosion.

Die erfindungsgemäßen Konstruktionselemente finden insbesondere dort Verwendung, wo eine Maßnahme des vorbeugenden Brandschutzes durch Beschichtung, Verschalung, Abtrennung, Auskleidung, Ausfüllen oder Abdichten von Hohlräumen bzw. Bauteilen im Bereich des Hochbaus, Tiefbaus, der Elektrotechnik, des Fahrzeug-, Machinen- oder Anlagenbaus vorgenommen werden soll und mit dem Auftreten von Schwitzwasser, Anmachwasser für Mörtel oder Zemente, Kondenswasser, Regenwasser oder Grundwasser zu rechnen ist.

Im folgenden soll die Erfindung beispielhaft erläuert werden: die angegebenen Teile sind Gewichtsteile bzw. Gewichtsprozente, soweit nicht anders vermerkt ist.

Als Polyisocyanate werden beispielhaft folgende Typen eingesetzt:

Polyisocyanat A: Technisches 4,4'-Diphenylmethandiisocyanat mit einem Gehalt en Isomeren und ca. 10 % an höherfunktionellen Mehrkernanteilen. Isocyanatgehalt ca. 31 %.

Polyisocyanat B: Gleichartiges Isocyanat mit einem etwa doppelten Gehalt an hoher kondensierten Anteilen, Isocyanatgehalt ca. 31 %.

Polyisocyanat C: Gleichartiges Isocyanat mit einem nochmals etwa verdoppelten Gehalt an höherkondensierten Anteilen. Isocyanatgehalt ca. 31 %.

Als phosphorhaltige Kondensationsprodukte zur Reaktion mit den Isocyanaten werden technische Produkte mit folgenden idealisierten Strukturen beispielhaft eingesetzt:

Kondensationsprodukt K:

$(CH_3O)_2POCH_2N(C_2H_4OH)_2$; Wassergehalt ca. 0,25 %

Kondensationsprodukt L:

$(CH_3)_2POCH_2N(C_3H_6OH)_2$: Wassergehalt ca. 0,3 %

Beispiehaft werden folgende Füllstoffe verwendet

Aluminiumhydroxydfüllstoffe der im folgenden tabellarisch aufgeführten Korngrößen und sonstigen Eigenschaften
(Apryl® B-Typen der Bayer AG)
Füllstoff F 2 - F 120

| Apryl® B | 120 | 90 | 60 | 40 | 25 | 15 | 8 | 2 |
|---|---|---|---|---|---|---|---|---|
| $Al(OH)_3$ (%) | 98,6 | 98,7 | 98,7 | 98,7 | 99,5 | 99,5 | 99,5 | 99,3 |
| $SiO_2$ (%) | 0,2 | 0,2 | 0,2 | 0,2 | 0,2 | 0,2 | 0,2 | 0,2 |
| $Fe_2O_3$ (%) | 0,04 | 0,04 | 0,04 | 0,04 | 0,03 | 0,03 | 0,03 | 0,02 |
| $Na_2O$ gesamt (%) | 0,5 | 0,5 | 0,5 | 0,5 | 0,3 | 0,3 | 0,3 | 0,3 |
| $Na_2O$ wasserlöslich (%) | 0,2 | 0,2 | 0,2 | 0,2 | 0,03 | 0,03 | 0,03 | 0,05 |
| Freie Feuchte (%) | 0,5 | 0,5 | 0,5 | 0,5 | 0,4 | 0,3 | 0,3 | 0,3 |
| Kornverteilung $D_{50}$ (µm) | 1,2-1,8 | 1,5-2,0 | 1,5-2,0 | 1,5-2,8 | 8 | 11 | 15 | 20-25 |
| BET-Oberfläche ($m^2/g$) | 10-12 | 8-10 | 4-8 | 2-4 | 2,2 | 1,5 | 0,8 | 0,2 |
| Schüttgewicht (g/l) | 250 | 250 | 250 | 450 | 600 | 650 | 700 | 950 |
| Bezeichnung F | 120 | 90 | 60 | 40 | 25 | 15 | 8 | 2 |

Alle Daten sind Richtwerte, die produktionsbedingten Schwankungen unterliegen

$CO_3$ Füllstoff F 215 und F 240; Gipsfüllstoff F 315 und F 340

| F | 215 | 240 | 315 | 340 |
|---|---|---|---|---|
| Rückstand auf 200 µm-Sieb | 0,1 % | 1 % | 0,1 % | 1 % |
| oberer Schnitt (µm) | 125 | 200 | 120 | 220 |
| $D_{50}$, mittlerer Teilchen-durchmesser (µm) | 15 | 25 | 13 | 28 |

**Sonstige Zusätze**

$Z_1$: Weichmacher Methylphosphonsaurediethylester
$Z_2$; Additionsprodukt aus 1 Mol Ethylendiamin und 3,7 Mol Propylenoxid
$Z_3$: Eisenoxid-Rotpigment (Bayferrox 140 M der Bayer AG)
$Z_4$: Polyethersilikon-Stabilisator (OS 20, Bayer AG)
$Z_5$ Wasserfreier Ceolith (Pulver, Baylith®, Bayer AG)

Die Herstellung erfolgte, indem das Kondensationsprodukt, gegebenenfalls im Gemisch mit Füllstoffen und sonstigen Zusätzen, bei 15°C unter gutem Rühren mit dem Isocyanat vermischt, in eine verschließbare senkrechte Plattenform mit 3 cm Dicke, die auf 40°C vorgeheizt war, eingegossen und dort zur Abreaktion gebracht wurde. Nach 10 Minuten wurde dann entformt.

Die hergestellten Intumeszenzwerkstoffe sind im folgenden rezepturmäßig in tabellarischer Form aufgeführt:

| Beispiel Nr. | | 1 | 2 | 3 | 4 | 5 | 6 |
|---|---|---|---|---|---|---|---|
| Intumeszenzmaterial | | 1 | 2 | 3 | 4 | 5 | 6 |
| Isocyanat A | Gew.-Tle. | - | - | - | - | - | - |
| Isocyanat B | -"- | 30 | 30 | 30 | 30 | 30 | 30 |
| Isocyanat C | -"- | - | - | - | - | - | - |
| Kondensationsprod. K | -"- | 25 | 25 | 25 | 25 | 25 | 25 |
| Kondensationsprod. L | -"- | - | - | - | - | - | - |
| Füllstoff (40 Gew.-Tle.) Typ F | | 2 | 8 | 15 | 25 | 40 | 60 |
| Zusatz $Z_1$ | Gew.-Tle. | - | - | - | - | - | - |
| Zusatz $Z_2$ | -"- | - | - | - | - | - | - |
| Zusatz $Z_3$ | -"- | - | - | - | - | - | - |
| Zusatz $Z_4$ | -"- | - | - | - | - | - | - |
| Raumgewicht $g/m^3$ | | 0,18 | 0,17 | 0,19 | 0,18 | 0,19 | 0,19 |
| Intumeszenz 450°C | | 2 | 3 | 3 | 3 | 5 | 5 |

| | | | | | | | |
|---|---|---|---|---|---|---|---|
| Intumeszenz Flamme | 1 | 2 | 3 | 3 | 5 | 5 | |

| Beispiel Nr. | | 7 | 8 | 9 | 10 | 11 | 12 | 13 |
|---|---|---|---|---|---|---|---|---|
| Intumeszenzmaterial | | 7 | 8 | 9 | 10 | 11 | 12 | 13 |
| Isocyanat A | Gew.-Tle. | - | 30 | 30 | - | - | - | 5 |
| Isocyanat B | -"- | 30 | - | - | - | - | 35 | - |
| Isocyanat C | -"- | - | - | - | 30 | 30 | - | 26 |
| Kondensationsprod. K | -"- | 25 | - | - | - | - | 25 | 25 |
| Kondensationsprod. L | -"- | - | 25 | 25 | 25 | 25 | - | - |
| Füllstoff (40 Gew.-Tle.) Typ F | | 90 | 215 | 240 | 315 | 340 | 8 | 2 |
| Zusatz $Z_1$ | Gew.-Tle. | - | - | - | - | - | 10 | 3 |
| Zusatz $Z_2$ | -"- | - | - | - | - | - | 3 | - |
| Zusatz $Z_3$ | -"- | - | - | - | - | - | 0,5 | 0,3 |
| Zusatz $Z_4$ | -"- | - | - | - | - | - | 0,05 | 0,01 |
| Raumgewicht g/m$^3$ | | 0,20 | 0,17 | 0,17 | 0,19 | 0,19 | 0,18 | 0,16 |
| Intumeszenz 450°C | | 5 | 5 | 2 | 5 | 2 | 4 | 3 |
| Intumeszenz Flamme | | 5 | 5 | 1 | 5 | 1 | 3 | 3 |

Aus den hergestellten Intumeszenzplatten wurden Quader mit einer Kantenlänge von 1 cm geschnitten und in einen auf 450°C vorgeheizten Umluftschrank gebracht. Nach 30 Min. wurden die Prüflinge dem Ofen entnommen und die Volumenzunahme festgestellt. Die Intumeszenzeigenschaft wurde wie folgt beurteilt:

| Volumenzunahme in % | Intumeszenz 450°C |
|---|---|
| über ca. 200 | 1 |
| ca. 100 - 200 | 2 |
| ca. 50 - 100 | 3 |
| ca. 10 - 50 | 4 |
| unter ca. 10 | 5 |

Die Beurteilung der Intumeszenzplatten 1 - 13 sind auf der Tabelle mit vermerkt. Desgleichen die Beurteilung der Intumeszenz an gleichartigen Würfeln mit Kanten länge 0,5 cm, die auf einem Drahtnetz liegend von oben 3 Min. mit der entleuchteten Flamme eines Erdgas-Bunsengrenners beaufschlagt wurden.

In allen Fällen verlöschten die Flammen an den Prüfkörpern unmittelbar nach Entfernung der Brennerflamme. Es hinterblieb ein nicht nachglühender Intumeszenzschaum.

**Beispiel 14**

Es werden zu einer fließfähigen Formulierung gemischt:

25 Teile Kondensationsprodukt K; 20 Teile F 8; 10 Teile F 240; 0,5 Teile $Z_3$, 10 Teile $Z_1$; 0,03 Teile $Z_4$ und diese Mischung mit einem aus der Polyurethan-Chemie gebräuchlichen Förder- und Mischaggregat mit Rührwerksmischkopf gemischt mit 30 Teilen Isocyanat C.

Das austretende Reaktionsgemisch wird in einen größeren Topf (2 Liter) gegeben, wo es zu einem porösen Intumeszenzwerkstoff aushärtet, der ein Raumgewicht von ca. 170 kg/m$^3$ besitzt.

Weiterhin wird es in eine verschließbare Plattenform wie vorbeschrieben eingetragen, bis diese zu 80 % gefüllt ist; nech Verschließen der Form härtet das Reaktionsgemisch aus zu einer Platte mit einem Raumgewicht von ca. 550 kg/m$^3$.

Weiterhin wird es in eine offene Plattenform eingetragen, in der sich mittig zwischen den Seiten wänden eine gelochte 0,8 mm starke Edelstahlplatte befindet, so daß diese vom erhärtenden und auftreibenden Reaktionsgemisch umschlossen wurde. Die entstehenden mittig durch gelochtes Stahlblech verstärkten Platten aus der Intumeszenzmasse haben die Maße 1,5 x 12 x 120 cm.

Die Intumeszenz des frei und in der geschlossenen Form hergestellten Materials wird bei Beflammung mit 3 beurteilt. Nachbrennen wird nicht beobachtet. In der Brennerflamme hat der gebildete Intumeszenzschaum auch nach 90 Minuten Bestand. Es wird eine Keramisierung, d. h. Ausbildung eines anorganischen Schaumgerüstmaterials mit guter Eigenfestigkeit beobachtet.

**Beispiel 15**

Es werden folgende Mischungen hergestellt:

**Mischung 1:**

250 Teile Kondensationsprodukt K:
200 Teile F 25;
5 Teile $Z_3$.
90 Teile $Z_1$:
0,4 Teile $Z_4$:
3 Teile $Z_5$.

**Mischung 2:**

300 Teile Isocyanat C:
100 Teile F 240:
100 Teile Ammoniumpolyphosphat:
1 Teil $Z_3$.

Beide Mischungen werden maschinell bei 19°C miteinander verrührt und nach 20 Sek. Rührzeit in eine Plattenform wie bei Beispiel 1 - 14 gegeben.

Es wird eine Entformungszeit von 7 Minuten beobachtet, dann kann man der Form, die mit einem Trennmittel auf Wachsbasis behandelt wurde, die Platte aus Intumeszenzmaterial entnehmen. Sie hat ein Raumgewicht von ca. 450 $kg/m^3$. Die Platte ist flexibel. Im Intumeszenztest wird eine Intumeszenz von 3 - 4 bei Beflammung gefunden. Das Material brennt nicht nach. Bei mehrstündiger Beflammung mit der entleuchteten Flamme eines Bunsenbrenners wird der gebildete stabile Intumeszenzschaum nicht abgetragen, sondern es hinterbleibt nach allmählicher Oxydation des Karbonisierungsgerüstes ein fester weißer poröser Keramisierungskuchen, der die rückwärtigen Bereiche vor weiterem Flammenzugriff schützt. Es findet keine Flammenerosion statt.

## Patentansprüche

1. Bei Temperaturen über 100°C Wasser abspaltende Füllstoffe enhaltende, massive oder poröse Intumeszenzmassen und Konstruktionselemente, erhältlich
durch Umsetzung von
Polyisocyanaten mit
phosphorhaltigen Hydroxylverbindungen, insbesondere
mindestens zwei Hydroxylgruppen aufweisenden phosphorhaltigen Kondensationsprodukten, erhältlich durch Kondensation von gegebenenfalls OH-Gruppen enthaltenden primären oder sekundären aliphatischen, araliphatischen oder heterocyclischen Mono- und/oder Polyaminen, Carbonylverbindungen und Dialkylphosphiten, gegebenenfalls unter anschließendem Oxalkylieren, und gegebenenfalls
Cyanursäure und/oder Cyanursäurederivaten,
in Gegenwart von oberhalb 100°C wasserabspaltenden Füllstoffen und gegebenenfalls weiteren Hilfs- und Zusatzstoffen,
dadurch gekennzeichnet, das als Wasser abspaltende Füllstoffe solche verwendet werden, die mittlere Korngrößen über 5 µm besitzen, vorzugsweise 8 - 50 µm, und/oder BET-Oberflächen von weniger als 5 $m^2/g$, vozugsweise 2 - 0,1 $m^2/g$ aufweisen.

2. Intumeszenzmassen gemäß Anspruch 1 dadurch gekennzeichnet, daß sie als Füllstoff Al-Hydroxid der genannten Korngrößen in Mengen von 0,3 bis 85 Gew.-% enhalten.

3. Intumeszenzmassen gemäß Anspruch 1 und 2 dadurch gekennzeichnet, daß sie neben Al-Hydroxid der genannten Korngrößen weitere Füllstoffe auf Carbonatbasis bei einer Füllstoffgesamtmenge von 0,3 - 85 Gew.-% enthalten.

4. Konstruktionselemente für den vorbeugeden Brandschutz, hergestellt unter Mitverwendung der Intumeszenzmassen gemäß Anspruch 1 bis 3.

## Claims

1. Filler-containing, solid or porous intumescent compositions and construction elements which eliminate water at temperatures above 100°C and can be obtained by reacting
polyisocyanates with
phosphorus-containing hydroxyl compounds, in particular phosphorus-containing condensation products containing at least two hydroxyl groups and obtainable by condensation of primary or secondary alphatic, araliphatic or heterocyclic monoamines and/or polyamines, carbonyl compounds and dialkyl phosphites which

optionally contain OH groups, if appropriate with subsequent oxalkylation, and, if appropriate,
cyanuric acid and/or cyanuric acid derivatives, in the presence of fillers which eliminate water above 100°C and, if appropriate, further auxiliaries and additives,
characterized in that the water-eliminating fillers used are those having mean grain sizes above 5 µm, preferably 8 - 50 µm, and/or BET surface areas of less than 5 $m^2/g$, preferably 2 - 0.1 $m^2/g$.

2. Intumescent compositions according to Claim 1, characterized in that they contain, as filler, Al hydroxide of the grain sizes mentioned in amounts of 0.3 to 85 % by weight.

3. Intumescent compositions according to Claims 1 and 2, characterized in that they contain, besides Al hydroxide of the grain sizes mentioned, further carbonate-based fillers with a total amount of filler of 0.3 - 85 % by weight.

4. Construction elements for preventative fireproofing, produced with concomitant use of the intumescent compositions according to Claims 1 to 3.

**Revendications**

1. Compositions intumescentes et éléments de construction compacts ou poreux contenant des charges libérant de l'eau à des températures au-dessus de 100°C, pouvant être obtenus
par réaction de
polyisocyanates avec
des composés hydroxyliques contenant du phosphore, notamment des produits de condensation contenant du phosphore, présentant au moins deux groupes hydroxyle, obtenus par condensation de mono- et/ou de polyamines primaires ou secondaires aliphatiques, araliphatiques ou hétérocycliques contenant éventuellement des groupes OH, de composes carbonyliques et de phosphites de dialkyle, éventuellement suivie d'une oxalkylation, et le cas échéant
d'acide cyanurique et/ou de dérivés d'acide cyanurique,
en présence de charges libérant de l'eau au- dessus de 100°C et, le cas échéant, d'autres adjuvants et additifs,
caractérisées en ce qu'on utilise comme charges libérant de l'eau des charges qui possédent une grosseur de grain moyenne supérieure à 5 µm, der préférence comprise entre 8 et 50 µm et/ou qui présentent des surfaces BET de moins de 5 $m^2/g$, de préférence de 2 à 0,1 $m^2/g$.

2. Compositions intumescentes suivant la revendication 1, caractérisées en ce qu'elles contiennent comme charge de l'hydroxyde d'aluminium, de la grosseur de grain mentionnée, en quantités de 0,3 à 85 % en poids.

3. Compositions intumescentes suivant les revendications 1 et 2, caractérisées en ce qu'elles contiennent, à côté d'hydroxyde d'aluminium de la grosseur de grain mentionnée, d'autres charges à base de carbonate, pour une quantité totale de charges de 0,3 à 85 % en poids.

4. Eléments de construction pour la protection contre l'incendie, réalisés en utilisant les compositions intumescentes suivant les revendications 1 à 3.